Europäisches Patentamt

European Patent Office

Office européen des brevets

(19)

(11) Veröffentlichungsnummer : **0 043 423**
**B1**

(12) # EUROPÄISCHE PATENTSCHRIFT

(45) Veröffentlichungstag der Patentschrift :
15.08.84

(21) Anmeldenummer : 81103598.9

(22) Anmeldetag : 11.05.81

(51) Int. Cl.³ : **F 16 L   9/18**, F 16 L   7/00,
**B 65 G 51/18**

(54) Abstandshalter zum Abstützen von Rohren innerhalb anderer Rohre, insbesondere zur Halterung von Rohren von Rohrpostsystemen in Schutzrohren.

(30) Priorität : 05.07.80 DE 3025537

(43) Veröffentlichungstag der Anmeldung :
13.01.82 Patentblatt 82/02

(45) Bekanntmachung des Hinweises auf die Patenterteilung : 15.08.84 Patentblatt 84/33

(84) Benannte Vertragsstaaten :
AT GB NL SE

(56) Entgegenhaltungen :
DE-A- 2 655 420
US-A- 2 914 090
US-A- 3 777 502

(73) Patentinhaber : **Arthur Böhm Kunststoffverarbeitung**
**Kirchenlamitzerstrasse 8**
**D-8676 Schwarzenbach/Saale (DE)**

(72) Erfinder : **Böhm, Arthur**
**Kirchenlamitzerstrasse 8**
**D-8676 Schwarzenbach (DE)**

(74) Vertreter : **Reinhard, Kreutz & Skuhra**
**Leopoldstrasse 51**
**D-8000 München 40 (DE)**

## Beschreibung

Die Erfindung betrifft einen Abstandshalter gemäß dem Oberbegriff des Anspruchs 1.

Ein Abstandshalter der eingangs genannten Art ist aus der US-A-3 777 502 bekannt, der aus einem inneren und einem äußeren Lagerring besteht. Der innere und äußere Lagerring werden durch in Umfangsrichtung radial verlaufende Verbindungs-elemente auf Abstand zueinander gehalten. Dieser Abstandshalter läßt sich nicht auf abweichende Innendurchmesser der zu halternden Rohre abstellen.

Die Erfindung liegt die Aufgabe zugrunde, einen Abstandshalter für koaxiale Doppelrohrsysteme, insbesondere für Rohrpostsysteme in Schutzrohren, zu schaffen, der eine Anpassung an verschiedene Nennweiten der Rohre ermöglicht.

Diese Aufgabe wird erfindungsgemäß durch den kennzeichnenden Teil des Anspruchs 1 gelöst.

Weitere Ausgestalgungen des Abstandshalters ergeben sich aus den Unteransprüchen.

Bei dem Abstandshalter ist auf einfache Weise eine Anpassung an verschiedene Nennweiten der Rohre möglich, wobei der Innendurchmesser und/oder der Außendurchmesser des Abstandshalters auf die jeweiligen Nennweiten angepaßt werden können. Die einzelnen, koaxialen Ringe des Abstandshalters sind durch Verbindungselemente gegeneinander befestigt und ermöglichen das Entfernen einzelner äußerer oder innerer Ringe.

Bei einer Ausführungsform sind am Außenumfang des Abstandshalters Kammern zur Aufnahme von Kabeln oder dergleichen vorgesehen.

Im folgenden wird der Abstandshalter anhand der Zeichnung beschrieben. Es zeigen :

Figur 1   eine Aufsicht auf eine Ausführungsform des Abstandshalters,

Figur 2   eine Aufsicht auf eine weitere Ausführungsform des Abstandshalters,

Figur 3   eine Schnittdarstellung des Abstandshalters nach Fig. 1 entland der Linie 5-5' in Fig. 1,

Figur 4   eine Fig. 3 entsprechende Ansicht einer abgewandelten Ausführungsform des Abstandshalters,

Figur 5   eine Fig. 3 entsprechende Ansicht einer weiter abgewandelten Ausführungsform des Abstandshalters, und

Figuren 6 und 7   die Ansicht einer weiteren Ausführungsform des Abstandshalters.

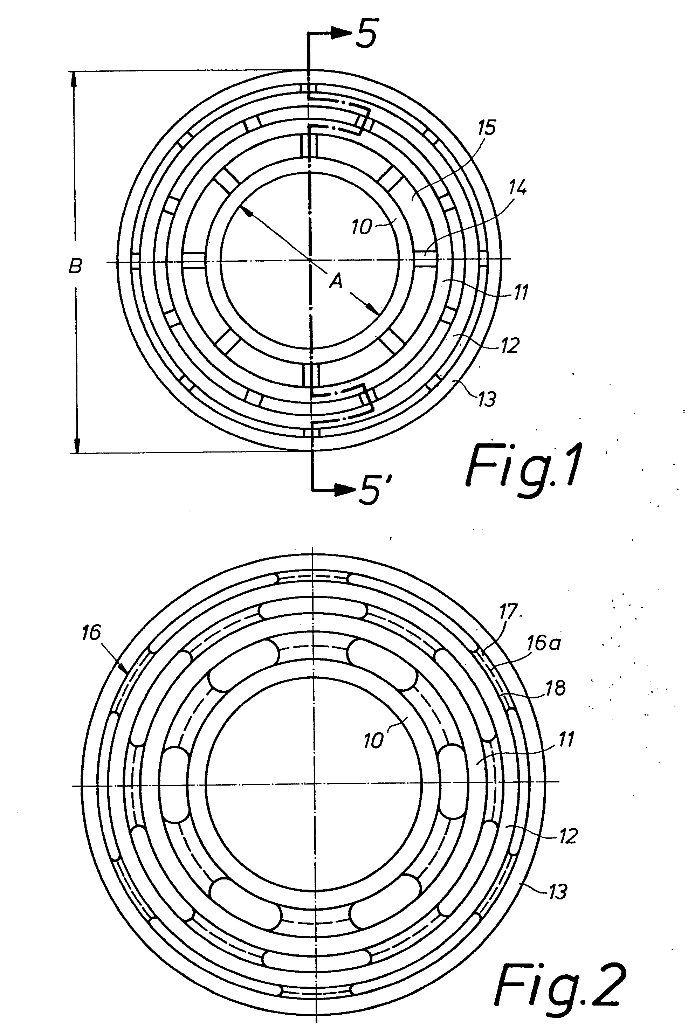

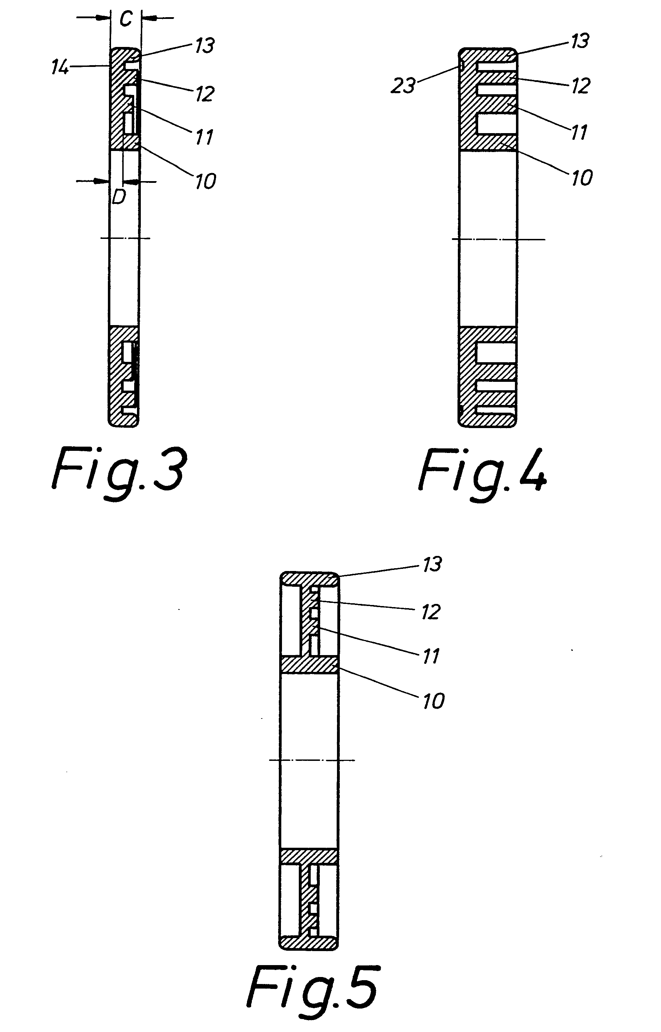

Fig. 1 zeigt eine erste Ausführungsform des Abstandshalters, der auch als Distanzscheibe bezeichnet werden kann. Der Abstandshalter besteht aus mehreren konzentrischen Ringen 10, 11, 12 und 13, deren Zahl beliebig gewählt werden kann. Die einander benachbarten Ringe, z. B. die Ringe 10 und 11, sind über Verbindungselemente oder Stege 14 aneinander befestigt. Der Abstand zwischen den Ringen 10 und 11, 11 und 12 usw. kann konstant gewählt sein oder auch unterschiedlich. Damit ist ersichtlich, daß bei einer entsprechenden Wahl der Zahl von konzentrisch zueinander angeordneten Ringen ein Abstandshalter geschaffen wird, der mit einem vorbestimmten Innendurchmesser A und einem vorbestimmten Außendurchmesser B gefertigt wird. Ein derartiger Abstandshalter läßt sich für die nicht gezeigten Schutzrohre mit beliebigem Durchmesser einsetzen. Ist beispielsweise der Durchmesser des Schutzrohres kleiner als der Durchmesser B des in Fig. 1 gezeigten Abstandshalters, so kann er durch Entfernen einer entsprechenden Zahl von äußeren Ringen auf den betreffenden Durchmesser des Schutzrohres verkleinert werden. Entsprechend läßt sich auch der Innendurchmesser A des Abstandshalters dadurch vergrößern, daß der Ring 10 oder zusätzlich auch der Ring 11 entfernt werden. Damit ist ersichtlich, daß sich der Abstandshalter ohne weiteres auf verschiedene Außen- und/oder Innendurchmesser abstimmen läßt, indem die entsprechenden Ringe entfernt werden. Die Entfernung der Ringe ist dadurch möglich, daß sie gemäß Fig. 1 mit dem jeweils benachbarten Ring über Stege 14 verbunden sind, wobei die Stege 14 zur leichten Entfernbarkeit der einzelnen Ringe kleinere Materialstärke als die Ringe selbst haben, wie dies unter Bezugnahme auf Fig. 3 und 4 noch beschrieben wird.

Neben den jeweiligen Stegen 14 sind Öffnungen oder Schlitze 15 definiert, die entsprechend den Ringen bogenförmigen Verlauf haben, wobei die radiale Breite dieser Schlitze oder Öffnungen 15 dem Abstand zwischen den betreffenden, benachbarten Ringen entspricht. Die Zahl der Stege 14 kann gegenüber der in Fig. 1 gezeigten Ausführungsform erhöht oder erniedrigt werden, sollte jedoch so groß sein, daß bei Verwendung des Abstandshalters die konzentrischen Ringe stabilgenug gegeneinander abgestützt sind, um eine sichere Halterung eines Rohres gegenüber dem Schutzrohr zu gewährleisten.

Fig. 2 zeigt einen Abstandshalter, bei dem die Verbindungselemente 16 im wesentlichen bogenförmige Abschnitte sind, die etwa in der Mitte zwischen den zugehörigen Ringen eine Schwächungslinie 16a aufweisen, z. B. in Form einer Einkerbung, welche ebenfalls in Form eines Kreisbogens vorliegt. Wird bei der in Fig. 2 dargestellten Ausführungsform der Ring 13 abgetrennt, so werden die Verbindungselemente 16 jeweils in einen Abschnitt 17 und 18 aufgeteilt, die beidseitig der mit 16a bezeichneten Schwächungslinie liegen, wobei der Abschnitt 17 zusammen mit dem Ring 13 entfernt wird, während der Abschnitt 18 am Ring 12 verbleibt. Damit wird ein Abstandshalter erhalten, der die Ringe 10 bis 12 (in Fig. 3) beinhaltet und zusätzlich an dem Ring 12 vom Ring 12 etwa strahlenförmig nach außen abstehende Abschnitte 18 trägt, die nach Einsetzen des Abstandshalters an der Innenwand des Schutzrohes anliegen. Damit wird auch eine geringfügige Ansammlung von Wasser verhindert, weil das Wasser durch die zwischen den Abschnitten 18 gebildeten Freiräume im Schutzrohr abfließen kann. Bei der Ausführungsform nach Fig. 1 würde dagegen ein Wasserstand möglich sein, der maximal beispielsweise der radialen Stärke des äußeren Ringes 13 entspricht.

Nach den Fig. 3 und 4 liegen die einzelnen Ringe 10 bis 13 in einer gemeinsamen Ebene, wobei die Ringe vorzugsweise eine Materialstärke bzw. eine axiale Erstreckung C haben, während die Stege oder Verbindungselemente 14 eine demgegenüber geringere Materialstärke bzw. axiale Erstreckung D aufweisen. Die Ausführungsform nach Fig. 4 unterscheidet sich von den vorstehend beschriebenen Ausführungsformen dadurch, daß die einzelnen Ringe die Form von Rohrabschnitten haben, wodurch eine größere Anlagefläche zwischen dem jeweils äußersten Ring und der Innenwand des Schutzrohres und/oder im innersten Ring und dem Rohr gewährleistet ist, was zu einer stabileren Anordnung von Schutzrohr und Rohr führt.

Wie in Fig. 5 gezeigt ist, können wahlweise auch nur einzelne Ringe die Form von Rohrabschnitten haben, beispielsweise der äußerte Ring 13 und der innerste Ring 10.

Zur Erleichterung des Entfernens der Ringe durch Trennung entsprechender Verbindungselemente 14, 16 können letztere auf derjenigen Seite, an welcher sie gemäß Fig. 3 mit der einen außenseite der Ringe fluchten, mit Aussparungen 23 oder Vertiefungen versehen sein, wie in Fig. 4 angedeutet ist.

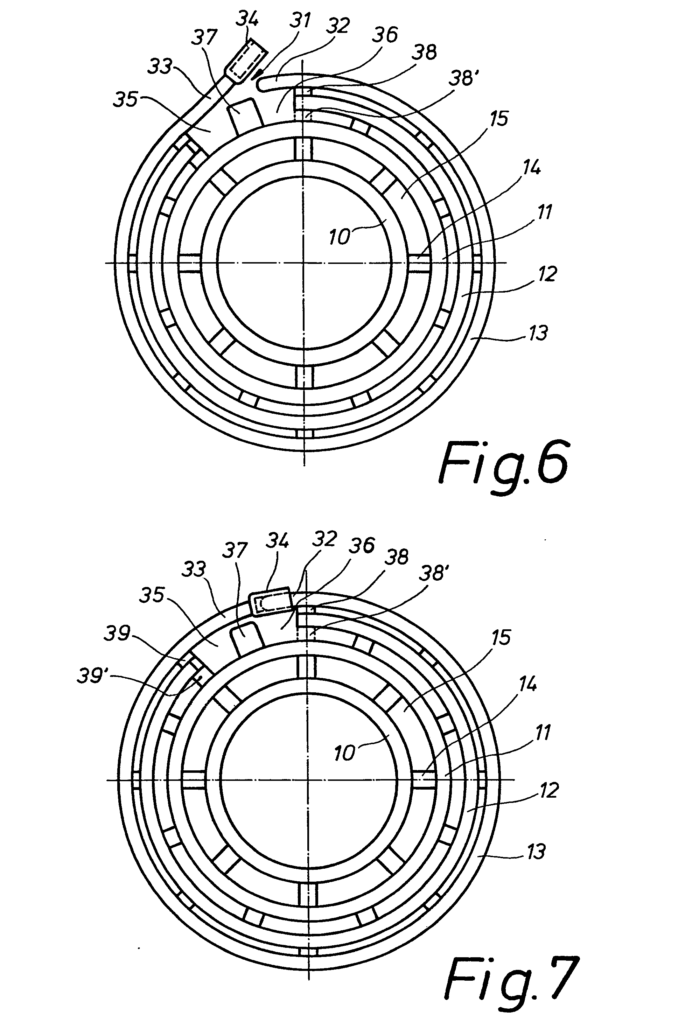

Die Fig. 6 und 7 zeigen eine weitere Ausführungsform des Abstandshalters. Der Abstandshalter hat im wesentlichen gleiche Form, wie unter Bezugnahme auf Fig. 1 beschrieben ist, und ist zur Verwendung in Schutzrohren ausgelegt, welche einen Normdurchmesser, z. B. einen Innendurchmesser von 160 mm, haben. Der äußere Ring 13 hat einen dem Innendurchmesser des Schutzrohres entsprechenden Außendurchmesser und ist an einer Stelle getrennt, die in Fig. 6 durch das Bezugsezeichen 31 angedeutet ist.

Fig. 6 zeigt den Abstandshalter nach seiner Herstellung. Der äußere Ring 13 ist an der Stelle 31 derart getrennt, daß das eine Ende 32 des Ringes 13 konzentrisch zu den übrigen Ringen liegt, während das andere Ende 33 aus der konzentrischen Krümmung heraus nach oben verläuft und mit einer Muffe 34 versehen ist. Die Muffe 34 ist auf ihrer dem Ende 32 gegenüberliegenden Seite mit einer in Fig. 6 und 7 angedeuteten Öffnung versehen, so daß die Muffe 34 auf das Ende 32 des äußeren Ringes 13 aufschiebbar ist. Diesen Zustand zeigt Fig. 7. Durch das Schließen des äußeren Ringes 13 infolge des Aufsteckens der Muffe 34 auf das Ende 32 des äußeren Ringes 13 werden nach Fig. 7 zwei Kammern 35, 36 geschaffen, die zur Aufnahme von Kabelsträngen oder dergleichen dienen. Die beiden Kammern 35, 36 sind durch einen Steg 37 voneinander getrennt, der am Ring 11 radial nach außen verlaufend ausgebildet ist und eine Höhe hat, die etwa dem Abstand zwischen dem äußeren Ring 13 und dem Ring 11 entspricht. Der Steg 37 kann gegenüber den Verbindungselementen größere Breite haben, wie Fig. 7 zeigt. Bei geschlossenem äußeren Ring 13 nach dem Aufstecken der Muffe 34 auf das Ende 32 kann somit der äußere Ring 13 im Bereich der Muffe 34 an dem Steg 37 an- bzw. aufliegen.

Das freie Ende 32 des äußeren Ringes 13 verläuft konzentrisch und ist über ein Verbindungselement 38 (in Fig. 6 nach links) in Richtung auf die Muffe 34 hinaus verlängert. Zur Stabilisierung der Lage des äußeren Ringes 13 im Bereich des freien Endes 32 kann das Verbindungselement 38 durchgehend bis zum inneren Ring 10 verlaufend ausgebildet sein, wie durch den Abschnitt 38' angedeutet ist, welcher den Ring 12 mit dem Ring 11 verbindet. Ist eine gewisse Flexibilität des freien Endes 32 erwünscht, so daß das freie 32 des äußeren Ringes 13 zum Zwecke des Aufschiebens der Muffe 34 auf das freie Ende 32 nach außen bewegbar ist, wird der Verbindungselementabschnitt 38' weggelassen. Entsprechend kann ein Verbindungselement 39 durchgehend zwischen dem äußeren Ring 13 und dem inneren Ring 10 vorgesehen sein, welches gemäß Fig. 6 und 7 vor dem Ende 33 bzw. der Muffe 34 des Außenringes liegt. Dabei ist in ähnlicher Weise zwischen dem Ring 12 und dem Ring 11 ein Abschnitt 39' vorgesehen, der ebenfalls weggelassen werden kann, falls das Ende 33 mit der Muffe leichter nach außen gebogen werden soll.

Bei der Ausführungsform nach Fig. 6 und 7 ist der Ring 12, d. h. der zweite Ring von außen, im Bereich des Steges 37 ausgeschnitten. Wahlweise kann der Ring 12 durchgehend sein und mit dem Steg 37 in Verbindung stehen; in diesem Fall sind die rechts und links des Steges 37 verlaufenden Abschnitte des Ringes 12 herauszuschneiden, um die Kammern 35 und 36 zu bilden, falls Kabelaufnahmekammern 35, 36 erwünscht sind. Der Ring 12 ist zwischen dem Verbindungselement 39 einerseits und dem Steg 37 andererseits sowie zwischen dem Verbindungselement 38 einerseits und dem Steg 37 andererseits abschnittsweise zu entfernen, wie die Fig. 6 und 7 zeigen.

Die Ausführungsform nach Fig. 6 und 7 eignet sich vorwiegend zum Einsatz in Schutzrohren mit Normgröße bzw. mit Schutzrohren von einem Durchmesser von beispielsweise 160 mm, wobei der äußere Ring 13 verbleibt, jedoch im Bedarfsfall z. B. der innere Ring 10 durch Abbrechen im Bereich der Verbindungsstege zum folgenden Ring 11 entfernt wird. Die Zahl der inneren Ringe gegenüber dem äußeren Ring 13 kann beliebig und für den jeweiligen Einsatzzweck entsprechend konzipiert sein, nachdem es ohne weiteres möglich ist, auch bei der Ausführungsform nach Fig. 6 und 7 mehr oder weniger innere Ringe zu entfernen.

Bei der Ausführungsform nach Fig. 6 und 7 kann anstelle der Muffe 34 auch eine andere befestigungseinrichtung vorgesehen sein, um die beiden einander gegenüberliegenden Enden 32, 33 des Ringes 13 miteinander zu verbinden, nachdem in die Kammern 35, 36 Kabel oder dergleichen eingeführt worden sind. So können die beiden Enden 32, 33 jeweils derart ausgebildet sein, daß sir als Schnappverbindung zusammenfügbar sind. Vorteilhafterweise ist die Befestigungseinrichtung derart ausgebildet, daß die beiden freien Enden 32, 33 derart miteinander verbunden werden können, daß der Ring 13 geschlossen wird. Als weitere Ausführungsform können die beiden Enden 32, 33 derartige Länge und derartige Ausbildung haben, daß sie auf dem Steg 37, beispielsweise über eine Klemm- oder Schnappverbindung, befestigbar sind.

Gemäß einer weiteren Ausführungsform ist es möglich, auch denjenigen Abschnitt des Ringes 11 zu entfernen, welcher zwischen den Verbindungselementen 38, 39 liegt und den Steg 37 trägt. In diesem Fall würde eine einzige Aufnahmekammer gebildet werden, die durch den äußeren Ring mit den Enden 32, 33 die beiden verbindungselemente 38, 39 und den inneren Ring 10 zwischen den beiden Verbindungselementen 38, 39 festgelegt ist. Der Ring 13 kann nicht nur an der mit 31 bezeichneten Stelle geschlitzt bzw, unterbrochen sein, sondern vielmehr auch an anderen Stellen entsprechende Ausbildung haben, so daß im Bedarfsfall auch an mehreren Stellen umfangsmäßig des Ringes 10 und/oder 11 Aufnahmekammern vorgesehen sind.

**Ansprüche**

1. Abstandshalter zum Abstützen von Rohren innerhalb anderer Rohre, insbesondere zur Halterung von Rohren von Rohrpostsystemen in Schutzrohren, bestehend aus konzentrisch zueinander angeordneten Ringen (10-13), die durch Verbindungselemente (14, 16, 38, 39) in Abstand zueinander gehalten sind, wobei der innere Ring (10) eine mittige Öffnung zur Aufnahme des abzustützenden Rohres aufweist und der äußere Ring (13) zur Anlage an der Innenwandung des äußeren Rohres vorgesehen ist, dadurch gekennzeichnet, daß mehr als zwei Ringe (10-13) vorgesehen sind, deren Verbindungselemente (14, 16, 38, 39) zwischen den jeweils benachbarten Ringen (10-13) trennbar ausgeführt sind, so daß zur Durchmesseranpassung eine geeignete Zahl der äußeren (13, 12) und/oder inneren Ringe (10, 11) entfernbar sind.

2. Abstandshalter nach Anspruch 1, dadurch gekennzeichnet, daß die Verbindungselemente (14) eine Kleinere axiale Erstreckung als die Ringe (10-13) aufweisen.

3. Abstandshalter nach Anspruch 1 oder 2, dadurch gekennzeichnet, daß die Verbindungselemente (16) jeweils eine Schwächungslinie (16a) aufweisen.

4. Abstandshalter nach Anspruch 3, dadurch gekennzeichnet, daß die Schwächungslinien (16a) im wesentlichen kreisbogenförmigen Verlauf haben.

5. Abstandshalter nach Anspruch 3 oder 4, dadurch gekennzeichnet, daß die Schwächungslinie (16a) jedes Verbindungselementes (16) etwa in der Mitte zwischen den beiden benachbarten Ringen verläuft.

6. Abstandshalter nach einem der Ansprüche 1 bis 5, dadurch gekennzeichnet, daß die Verbindungselemente (14, 16) und Ringe (10 bis 13) auf einer Stirnseite des Abstandshalters fluchten und daß die Verbindungselemente auf der fluchtenden Seite Aussparungen (23) aufweisen.

7. Abstandshalter nach einem der Ansprüche 1 bis 6, dadurch gekennzeichnet, daß der äußerste Ring (13) geschlitzt ist (bei 31), und daß Befestigungsmittel (34) zur verbindung der durch den Schlitz gebildeten freien Enden (32, 33) des äußersten Ringes vorgesehen sind.

8. Abstandshalter nach Anspruch 7, dadurch gekennzeichnet, daß zumindest der auf den äußeren Ring (13) nach innen folgende Ring (12) im Bereich des Schlitzes des äußeren Ringes (13) zur Bildung von Aufnahmekammern (35, 36) für Kabeln oder dergleichen zumindest teilweise entfernbar ist.

9. Abstandshalter nach Anspruch 8, dadurch gekennzeichnet, daß die Aufnahmekammern (35, 36) durch einen radial verlaufenden Steg (37) voneinander getrennt sind.

10. Abstandshalter nach einem der Ansprüche 7 bis 9, dadurch gekennzeichnet, daß beidseitig des Schlitzes des äußeren Ringes (13) jeweils ein durchgehendes Verbindungselement (38, 39) zwischen dem äußersten Ring (13) und dem innersten Rig (10) vorgesehen ist.

11. Abstandshalter nach Anspruch 7, dadurch gekennzeichnet, daß als Befestigungsmittel (34) an einem freien Ende (33) des äußeren Ringes (13) eine Muffe (34) zum Einstecken des anderen freien Endes (32) vorgesehen ist.

**Claims**

1. Spacer for the support of tubes within other tubes, especially for holding the tubes of tube postal systems within protective tubes, consisting of concentrically arranged rings (10-13), which are held spaced from one another by connector elements (14, 16, 38, 39), whereby the inner ring (10) has a central opening to receive the tube to be supported and the outer ring (13) is provided for mounting on the inner wall of the outer tube, characterized in that more than two rings (10-13) are provided, of which the connecting elements (14, 16, 38, 39) between adjacent rings (10-13) are separable, so that a suitable number of the outer (13, 12) and/or inner rings (10, 11) are removable, to provide diameter adjustment.

2. Spacer according to claim 1, characterised in that the connecting elements (14) have a smaller axial length than the rings (10-13).

3. Spacer according to claim 1 or 2, characterized in that the connecting elements (16) each have a line of weakness (16a).

4. Spacer according to claim 3, characterised in that the lines of weakness (16a) are substantially in the form of arcs of a circle.

5. Spacer according to claim 3 or 4, characterized in that the line of weakness (16a) of each connecting element (16) is approximately centrally located between the two neighbouring rings.

6. Spacer according to any one of claims 1 to 5, characterized in that the connecting elements (14, 16) and rings (10-13) are aligned on one face of the spacer and in that the connecting elements have recesses (23) on the alignment face.

7. Spacer according to any one of claims 1 to 6, characterized in that the outer ring (13) is slit (at 31), and that fastening means (34) is provided to join the free ends (32, 33) of the outer ring formed by the slit.

8. Spacer according to claim 7, characterised in that at least the next ring (12) inwards from the outer ring (13) is at least partially removable in the region of the split in the outer ring (13) in order to form housing cavities (35), 36) for cables or the like.

9. Spacer according to claim 8, characterized in that the housing cavities (35, 36) are separated from one another by a radially-extending flange (37).

10. Spacer according to any one of claims 7 to 9, characterized in that on each side of the slit in the outer ring (13) a continuous connecting element (38, 19) is provided between the outermost ring (13) and the innermost ring (10).

11. Spacer according to claim 7, characterized in that, as fastening means (34) on a free end (33) of the outer ring (13), a socket (34) is provided for insertion therein of the other free end (32).

## Revendications

1. Support d'écartement pour supporter des tubes à l'intérieur d'autres tubes, en particulier pour maintenir des tubes de systèmes de tubes postaux dans des tubes de protection, constitué par des anneaux (10, 13) disposés concentriquement les uns par rapport aux autres, qui sont maintenus à une certaine distance les uns des autres par des éléments de liaison (14, 16, 38, 39), l'anneau interne (10) comprenant une ouverture centrale pour laisser passer le tube à supporter et l'anneau externe (13) étant prévu pour s'appuyer sur la paroi interne du tube externe, caractérisé en ce que l'on prévoit plus de deux anneaux (10-13), dont les éléments de liaison (14, 16, 38, 39) sont constitués de manière à pouvoir être séparés entre anneaux respectivement voisins (10-13) de manière qu'en vue d'une adaptation des diamètres on puisse retirer un nombre approprié d'anneaux externes (13, 12) et/ou internes (10, 11).

2. Support d'écartement selon la revendication 1, caractérisé en ce que les éléments de liaison (14) présentent une dimension axiale plus petite que celle des anneaux (10-13).

3. Support d'écartement selon la revendication 1 ou 2, caractérisé en ce que les éléments de liaison (16) comprennent respectivement une ligne d'affaiblissement (16a).

4. Support d'écartement selon la revendication 3, caractérisé en ce que les lignes d'affaiblissement (16a) ont sensiblement la forme d'arcs circulaires.

5. Support d'écartement selon la revendication 3 ou 4, caractérisé en ce que la ligne d'affaiblissement (16a) de chaque élément de liaison (16) passe approximativement au milieu entre les deux anneaux voisins.

6. Support d'écartement selon l'une des revendications 1 à 5, caractérisé en ce que les éléments de liaison (14, 16) et les anneaux (10 à 13) sont au même niveau sur un côté frontal du support d'écartement et en ce que les éléments de liaison comprennent sur le côté en alignement des évidements (23).

7. Support d'écartement selon l'une des revendications 1 à 6, caractérisé en ce que l'anneau (13) qui est le plus à l'extérieur est fendu (en 31), et en ce qu'on prévoit des moyens de fixation (34) pour relier les extrémités libres (32, 33) de l'anneau le plus externe qui sont formées par la fente.

8. Support d'écartement selon la revendication 7, caractérisé en ce qu'au moins l'anneau (12) qui suit vers l'intérieur l'anneau le plus externe (13) peut être retiré, du moins partiellement, dans la zone de la fente de l'anneau externe (13) pour former des chambres de réception (35, 36) pour des câbles ou analogues.

9. Support d'écartement selon la revendication 8, caractérisé en ce que les chambres de réception (35, 36) peuvent être séparées l'une de l'autre par une nervure (37) orientée radialement.

10. Support d'écartement selon l'une des revendications 7 à 9, caractérisé en ce qu'un élément de liaison continu (38, 39), est prévu respectivement des deux côtés de la fente de l'anneau externe (13), entre l'anneau le plus externe (13) et l'anneau le plus interne (10).

11. Support d'écartement selon la revendication 7, caractérisé en ce qu'on prévoit comme moyen de fixation (34) à une extrémité libre (33) de l'anneau externe (13) un manchon (34) destiné à l'insertion de l'autre extrémité libre (32).

Fig.1

Fig.2

Fig.3

Fig.4

Fig.5

2

Fig.6

Fig.7

3